**Europäisches Patentamt**

**European Patent Office**

**Office européen des brevets**

(11) Veröffentlichungsnummer: **0 345 864**
A1

## (12) EUROPÄISCHE PATENTANMELDUNG

(21) Anmeldenummer: **89201367.3**

(22) Anmeldetag: **27.05.89**

(51) Int. Cl.4: **C25B 11/00 , H01M 4/00 , B01D 13/00**

(30) Priorität: **09.06.88 DE 3819633**

(43) Veröffentlichungstag der Anmeldung:
**13.12.89 Patentblatt 89/50**

(84) Benannte Vertragsstaaten:
**AT BE CH DE ES FR GB GR IT LI NL SE**

(71) Anmelder: **METALLGESELLSCHAFT AKTIENGESELLSCHAFT**
**Reuterweg 14 Postfach 10 15 01**
**D-6000 Frankfurt 1(DE)**

(72) Erfinder: **Levin, Gideon**
**Apt. M 9 2500 Abbott Road**
**Midland Michigan 48 640(US)**

(54) **Verfahren zur Herstellung einer Membran.**

(57) Zur Herstellung einer gasundurchlässigen und wasserdurchlässigen Membran, die aus einem organischen oder anorganischen Polymer besteht und die beim Gebrauch in wäßriger Lösung mindestens 60 % Wasser enthält, wird ein Polymer verwendet, das in wassermischbaren organischen Lösungsmitteln oder Lösungsmittelgemischen löslich ist und im Kontakt mit Wasser Hydrogele bildet. Das Polymer wird in dem Lösungsmittel gelöst, das gelöste Polymer mit einem gewebeartigen Substrat zu einem Verbundmaterial verbunden und das gelöste Polymer in dem Verbundmaterial mit Wasser zu einem Hydrogel entwickelt.

EP 0 345 864 A1

## Verfahren zur Herstellung einer Membran

Die Erfindung betrifft ein Verfahren zur Herstellung einer gasundurchlässigen und wasserdurchlässigen Membran, die aus einem organischen oder anorganischen Polymer besteht und die beim Gebrauch in wäßriger Lösung mindestens 60 % Wasser enthält.

Für manche Verfahren, die in Flüssigkeiten durchgeführt werden, sind Membranen erforderlich, die wasserdurchlässig sind und die eventuell auch gasundurchlässig sind. Solche Verfahren sind z.B. Trennverfahren, Ultrafiltrationen, Katalysen, Pervaporation, Slow Release-Verfahren und Elektrolysen.

Als besonderes Beispiel wird auf eine Zinkelektrolyse hingewiesen. Bei der üblichen Zinkelektrolyse werden Aluminium-Kathoden und Blei-Anoden in die $ZnSO_4$-Lösung eingesetzt. Auf den Kathoden wird metallisches Zink abgeschieden und an den unlöslichen Anoden wird Sauerstoff entwickelt, der beim Entweichen Säure-Nebel mitreißt. Wenn als Anode eine Wasserstoffdiffusions-Anode verwendet wird, wird kein Sauerstoff entwickelt und die Zellenspannung und damit der Energieverbrauch beträchtlich gesenkt. Die Oberfläche der Wasserstoffdiffusions-Anoden besteht aus elektrisch leitenden Matten, wie z.B. kohlenstoffhaltigen Fasern (US-PS 4 248 682, US-PS 4 412 894). Auf der dem Elektrolyten abgewandten Seite werden diese Matten mit Wasserstoff beaufschlagt. Zur Vermeidung · von Wasserstoffverlusten darf kein oder nur möglichst wenig gasförmiger Wasserstoff durch die Matten in den Elektrolyten gelangen. Dies kann durch Überdeckung der Matten mit einer Membran erfolgen, die sowohl gasundurchlässig als auch wasserdurchlässig ist.

Der Erfindung liegt die Aufgabe zugrunde, eine Membran herzustellen, die praktisch gasundurchlässig ist, eine gute Wasserdurchlässigkeit hat, trotz ihrer geringen Dicke eine gute Festigkeit hat und die gegenüber aggressiven Lösungen, insbesondere sauren Lösungen, beständig ist.

Die Lösung dieser Aufgabe erfolgt durch das eingangs geschilderte Verfahren und ist dadurch gekennzeichnet, daß

a) das Polymer nicht-ionenaustauschaktiv und in wassermischbaren organischen Lösungsmitteln oder Lösungsmittelgemischen löslich ist und im Kontakt mit Wasser Hydrogele bildet,

b) das Polymer im wassermischbaren organischen Lösungsmittel gelöst wird,

c) das gelöste Polymer mit einem gewebeartigen Substrat zu einem Verbundmaterial verbunden wird, und

d) das gelöste Polymer in dem Verbundmaterial mit Wasser zu einem Hydrogel entwickelt wird.

Der Wassergehalt der Membran beim Gebrauch in wäßriger Lösung soll vorzugsweise über 80 % liegen. Als Polymere können z.B. Polyacrylamid, Polyacrylnitril oder deren Copolymere, Polyvinylalkohol, Polyvinylacetat, Polyoxyethylen, Polyhydroxymethylmethacrylat verwendet werden. Als Lösungsmittel können z.B. Dimethylsulfoxid, Dimethylformamid, Hexamethylphosphorsäuretriamid verwendet werden. Das gewebeartige Substrat ist tuchartig und kann gewebt oder gewirkt sein oder als Vlies vorliegen. Es muß die für die Membran erforderliche Festigkeit ergeben. Vorzugsweise besteht es aus Polyester, Polypropylen, Glasfasern, Kohlenstoff-Fasern oder Metall. Die Entwicklung des Verbundmaterials mit Wasser zu einem Hydrogel kann auf der Herstellungs-Unterlage oder nach Abheben des Verbundmaterials erfolgen. Die Dicke der Membran wird dem jeweiligen Verwendungszweck angepaßt und liegt im allgemeinen zwischen etwa 0,3 bis 1,3 mm im entwickelten Zustand. Bei dicken gewebeartigen Substraten kann die Dicke der Membran größer sein. Der Ausdruck "gasundurchlässig" bedeutet, daß Gase bei Arbeitsbedingungen nicht durch die Membran permeieren. Die Herstellung des Verbundmaterials erfolgt auf einer Herstellungsunterlage, die z.B. aus einer Glasplatte besteht.

Zunächst wird auf die Herstellungs-Unterlage eine dünne Schicht des gelösten Polymers gleichmäßig aufgebracht. Auf diese Schicht des gelösten Polymers wird das gewebeartige Substrat gelegt. Auf das Substrat wird wieder eine dünne Schicht des gelösten Polymers gleichmäßig aufgebracht. Es ist zweckmäßig, die Schichten jeweils aus zwei oder mehreren Schichten zu bilden, da dadurch die Bildung von Poren mit Sicherheit vermieden wird.

Eine vorzugsweise Ausgestaltung besteht darin, daß die Lösung des Polymers gemäß (b) unter Zusatz eines viskositätserniedrigenden Lösungsmittels erfolgt. Als viskositätserniedrigendes Lösungsmittel können Keton-artige, wasserlösliche Lösungsmittel z.B. Aceton, Ether-artige, wasserlösliche Lösungsmittel z.B. Tetrahyurofuran, Amin-artige, wasserlösliche Lösungsmittel z.B. Triethylamin oder Polyethylenoxyd verwendet werden. Die Viskositätserniedrigung ergibt eine besonders gute Verbindung des Polymers mit dem Substrat und verhindert die Bildung von Poren auch in sehr dünnen Membranen. Außerdem kann eine sehr gute Verarbeitung bei Raumtemperatur erfolgen.

Eine vorzugsweise Ausgestaltung besteht darin, daß das Verbundmaterial gemäß (c) auf einen gewebeartigen Träger aufgebracht und auf diesem gemäß (d) das gelöste Polymer mit Wasser zu einem Hydrogel entwickelt wird. Das Aufbringen des Verbundmaterials auf den gewebeartigen Träger kann in der Weise erfolgen, daß der Träger auf das Verbundmaterial oder das Verbundmaterial auf den gewebeartigen Träger aufgebracht wird. Auf diese Weise wird bei der Entwicklung zum Hydrogel in Wasser eine gute Verbindung mit dem gewebeartigen Träger erzielt. Der gewebeartige Träger kann z.B. aus der Matte einer Wasserstoffdiffusions-Anode bestehen.

Eine vorzugsweise Ausgestaltung besteht darin, daß gemäß (b) gelöstes Polymer in mindestens einer Schicht auf eine poröse, wasserdurchlässige Unterlage aufgebracht wird, auf diese Schicht das gewebeartige Substrat gelegt wird, auf das gewebeartige Substrat mindestens eine weitere Schicht des gelösten Polymers aufgebracht wird, und in dem so gemäß (c) hergestellten Verbundmaterial das gelöste Polymer gemäß (d) mit Wasser zu einem Hydrogel entwickelt wird. Die poröse, wasserdurchlässige Unterlage liegt auf der Herstellungs-Unterlage. Sie kann aus organischem oder anorganischem Material bestehen. Die Durchdringung der porösen, wasserdurchlässigen Unterlage durch das gelöste Polymer wird bestimmt durch die Viskosität und Konzentration des gelösten Polymers und kann so kontrolliert werden, daß die Durchdringung teilweise oder ganz erfolgt. Die poröse, wasserdurchlässige Unterlage ermöglicht ein gutes Abheben des Verbundmaterials von der Herstellungsunterlage oder verbessert den Wasserzutritt zu der Unterseite des Verbundmaterials, wenn diese auf der Herstellungs-Unterlage entwickelt wird. Außerdem wird ein gewisser Schutz gegen Austrocknung der entwickelten Membran außerhalb von Wasser bewirkt.

Eine vorzugsweise Ausgestaltung besteht darin, daß Papier als poröse, wasserdurchlässige Unterlage verwendet wird. Papier ist als Unterlage besonders geeignet. Nach dem Entwickeln zum Hydrogel kann ein Teil der Papierdicke abgerieben werden.

Eine vorzugsweise Ausgestaltung besteht darin, daß das Papier vor dem Aufbringen des gelösten Polymers mit einer hydrophilen oder hydrophoben Flüssigkeit getränkt wird. Die Flüssigkeit kann hydrophob sein, z.B. Silikon, oder sie kann hydrophil sein, z.B. Glyzerin oder niedermolekulares Polyethylenoxid. Als Lösungsmittel wird eine leicht verdampfende Flüssigkeit gewählt. Durch die Tränkung wird die Festigkeit des Papiers wesentlich erhöht und die Durchdringung des Papiers durch das Polymer kann kontrolliert werden. Die Tränkung erfolgt so, daß eine Wasserdurchlässigkeit des Papiers erhalten bleibt.

Eine vorzugsweise Ausgestaltung besteht darin, daß der gewebeartige Träger aus einem elektrisch leitenden Material besteht und mit mindestens den Rändern auf eine Elektrodenplatte aufgeklebt ist, die Kanten des gewebeartigen Trägers mit dem Kleber versiegelt werden, die Schmalseiten der Elektrodenplatte mit Kleber bestrichen werden, um den gewebeartigen Träger und die Elektrodenplatte ein gewebeartiges Tuch gewickelt und verklebt wird, der Kleber ausgehärtet wird, das Verbundmaterial gemäß (c) auf das gewebeartige Tuch über dem gewebeartigen Träger aufgebracht und auf diesem gemäß (d) das gelöste Polymer mit Wasser zu einem Hydrogel entwickelt wird. Die Elektrodenplatte besteht bei einer Zinkelektrolyse aus einer Bleianode, die unter dem gewebeartigen Träger Zu- und Ableitungen für Wasserstoffgas hat. Der elektrische Träger besteht vorzugsweise aus graphitisiertem Kunststoff. Der gewebeartige Träger ist auf beiden Seiten der Elektrodenplatte aufgeklebt. Der Kleber ist elektrisch leitend. Die Versiegelung der Kanten des gewebeartigen Trägers erfolgt durch keilförmigen Auftrag des Klebers von der Oberfläche der Elektrodenplatte zur Oberkante des gewebeartigen Trägers. Die Schmalseiten der Elektrodenplatte werden in der Breite des gewebeartigen Tuches mit Kleber bestrichen. Auch die nicht vom gewebeartigen Träger bedeckten Teile der Frontseiten der Elektrodenplatte können mit Kleber bestrichen werden. Dieser Kleber muß nicht elektrisch leitend sein. Das gewebeartige Tuch kann wie das gewebeartige Substrat gemäß (c) beschaffen sein. Das Tuch wird auf den zur Versiegelung der Kanten aufgebrachten Kleber und den aufgestrichenen Kleber gedrückt. Die Aushärtung des Klebers kann, je nach Kleber, durch thermische Behandlung in einem Ofen erfolgen. Bei großen und schweren Elektrodenplatten erfolgt die ganze Behandlung vorzugsweise an vertikal hängenden Elektrodenplatten. Durch diese Arbeitsweise wird erreicht, daß auch die Kanten des gewebeartigen Trägers gegen das Permeieren von Gas mit Sicherheit abgedichtet werden.

Eine vorzugsweise Ausgestaltung besteht darin, daß vor dem Aufbringen des Verbundmaterials ein Rand auf dem gewebeartigen Tuch um den gewebeartigen Träger herum mit dem gelösten Polymer gemäß (b) bestrichen wird. Dadurch wird eine besonders gute Abdeckung der Kanten des gewebeartigen Trägers durch die Membran erzielt.

Ausführungsbeispiel

Als poröse, wasserdurchlässige Unterlage wurde ein mit Silikon behandeltes Papier-Blatt verwendet. In einem Erlenmeyer-Kolben wurden 36,8 g Dimethylsulfoxid vorgelegt. Bei 40-50°C wurde gerührt und 4,8 g Copolymer-Pulver auf Basis Polyacrylnitril zudosiert. Nach der kompletten Auflösung wurden 6,4 g Aceton zugegeben. Dabei erfolgte eine deutliche Viskositätserniedrigung. Auf das mit Silikon behandelte Papier wurde eine Naß-filmdicke von 50 μ der Polymer-Lösung aufge-bracht. Auf die noch feuchte 50 μ-Schicht wurde eine weitere Schicht mit 125 μ Naßfilmdicke aufge-tragen. Hierauf wurde ein Polyestergewebe aufgelegt. Auf das Polyester-Gewebe wurde ein weiterer Naßfilm von 200 μ Dicke der Polymer-Lösung aufgetragen.

Das so hergestellte Verbundmaterial wurde auf dem Papier von der als Herstellungsunterlage verwendeten Glasplatte abgehoben und in eine mit destilliertem Wasser gefüllte Schale eingebracht. Dort erfolgte unter Austausch des Dimethylsulfoxids gegen Wasser die Bildung der gewünschten Hydrogel-Struktur, die durch Einbettung des Polyestergewebes und Verwendung des Papiers als Stützmaterial eine gute mechanische Festigkeit aufwies. Die Dicke der entwickelten Membran be-trug ca. 460 μ. Dabei besaß das Papier eine Dicke von 100 μ und das Polyester-Gewebe eine Dicke von 90 μ.

Zur Herstellung einer doppelseitigen Elektrode für Laborversuche wurde eine Bleianode vom Fenstertyp wie folgt ausgerüstet: Eine Seite der Anode wurde um die Fensteröffnung herum bis zu etwa 1 cm breit über die Auflagefläche des Kohlefaserta-ches mit Graphitepoxikleber eingestrichen. Das Kohlefasertuch wurde zentriert über die Fensteröffnung aufgelegt und vorsichtig auf den Kleber aufgedrückt. Der Übergang des Kohlefasertuches auf den Bleirahmen wurde auf allen vier Seiten wie ein Dreieck mit Graphitepoxykleber aufgefüllt. Ein Polyestertuch wurde auf diese Seite der Anode und über das Kohlefasertuch gelegt und an den Rändern leicht auf den Graphitepoxykleber angedrückt. Dann wurde auf die Ränder des Polyestertuches verdünnter Epoxykleber gestrichen. Die Anode wurde herumgedreht. Anschließend wurde auf diese Seite der Anode ebenfalls ein Kohlefasertuch wie vorstehend beschrieben aufgebracht und die Kanten des Kohlefasertuches wie vorstehend beschrieben mit Graphitepoxykleber versiegelt. Danach wurden die zwei Schmalseiten des Bleirahmens mit Graphitepoxykleber bestrichen und das Polyestertuch wurde straff um die Bleianode herumgewickelt und auf den mit Graphitepoxykleber bestrichenen Flächen angedrückt. Anschließend wurde das Polyestertuch auch auf dieser Seite wie oben beschrieben mit verdünntem Epoxykleber bestrichen. Die so präparierte Anode wurde 65 min. bei 130° C hitzebehandelt, um den Epoxykleber auszuhärten. Nach dem Abkühlen der Anode auf Raumtemperatur wurden die Ränder des Polyestertuches um das Kohlefasertuch herum mit der Polymer-Dimethylsulfoxid-Lösung bestrichen. Danach wurde auf jeder Seite der Anode ein wie vorstehend beschrieben vorbereitetes Verbundmaterial über die Fensterflächen aufgebracht und leicht angedrückt. Danach erfolgte die Entwicklung des in dem Verbundmaterial gelösten Polymers zu einem Hydrogel durch Eintauchen der Anode in destilliertes Wasser. Nach der Entwicklung wurde die Anode im feuchten Zustand in eine Testzelle mit einer Zinksulfat-Lösung eingesetzt. In die Anode wurde Wasserstoff eingeleitet. Die Zelle erreichte eine Abscheidespannung von etwa 1,28 Volt bei der Zinkabscheidung. Es trat keine Wasserstoff-Permeation durch die Membran auf.

Die Vorteile der Erfindung bestehen darin, daß eine dünne, gleichmäßige Membran erzeugt werden kann, die eine gute Gasundurchlässigkeit und Wasserdurchlässigkeit aufweist, eine sehr gute me-chanische Festigkeit hat, gute Korrosionsbeständig-keit aufweist, eine gewisse Flexibilität hat, und mit einem gewebeartigen Träger gut verbunden werden kann ohne in diesen zu tief einzudringen. Sie ist besonders für die Herstellung von Gasdiffusionselektroden für elektrolytische Gewinnung von Metallen geeignet und insbesondere für die Zink-elektrolyse.

## Ansprüche

1. Verfahren zur Herstellung einer gasundurchlässigen und wasserdurchlässigen Membran, die aus einem organischen oder anorganischen Polymer besteht und die beim Gebrauch in wäßriger Lösung mindestens 60 % Wasser enthält, dadurch gekennzeichnet, daß

a) das Polymer nicht-ionenaustauschaktiv und in wassermischbaren organischen Lösungsmitteln oder Lösungsmittelgemischen löslich ist und im Kontakt mit Wasser Hydrogele bildet,

b) das Polymer im wassermischbaren organischen Lösungsmittel gelöst wird,

c) das gelöste Polymer mit einem gewebeartigen Substrat zu einem Verbundmaterial verbunden wird, und

d) das gelöste Polymer in dem Verbundmaterial mit Wasser zu einem Hydrogel entwickelt wird.

2. Verfahren nach Anspruch 1, dadurch gekennzeichnet, daß die Lösung des Polymers gemäß (b) unter Zusatz eines viskositätserniedrigenden Lösungsmittels erfolgt.

3. Verfahren nach Anspruch 1 oder 2, dadurch gekennzeichnet, daß das Verbundmaterial gemäß (c) auf einen gewebeartigen Träger aufgebracht und auf diesem gemäß (d) das gelöste Polymer mit Wasser zu einem Hydrogel entwickelt wird.

4. Verfahren nach einem der Ansprüche 1 bis 3, dadurch gekennzeichnet, daß gemäß (b) gelöstes Polymer in mindestens einer Schicht auf eine poröse, wasserdurchlässige Unterlage aufgebracht wird, auf diese Schicht das gewebeartige Substrat gelegt wird, auf das gewebeartige Substrat mindestens eine weitere Schicht des gelösten Polymers aufgebracht wird, und in dem so gemäß (c) hergestellten Verbundmaterial das geloste Polymer gemäß (d) mit Wasser zu einem Hydrogel entwickelt wird.

5. Verfahren nach Anspruch 4, dadurch gekennzeichnet, daß Papier als poröse, wasserdurchlässige Unterlage verwendet wird.

6. Verfahren nach Anspruch 5, dadurch gekennzeichnet, daß das Papier vor dem Aufbringen des gelösten Polymers mit einer hydrophilen oder hydrophoben Flüssigkeit getränkt wird.

7. Verfahren nach einem der Ansprüche 3 bis 6, dadurch gekennzeichnet, daß der gewebeartige Träger aus einem elektrisch leitenden Material besteht und mit mindestens den Rändern auf eine Elektrodenplatte aufgeklebt ist, die Kanten des gewebeartigen Trägers mit dem Kleber versiegelt werden, die Schmalseiten der Elektrodenplatte mit Kleber bestrichen werden, um den gewebeartigen Träger und die Elektrodenplatte ein gewebeartiges Tuch gewickelt und verklebt wird, der Kleber ausgehärtet wird, das Verbundmaterial gemäß (c) auf das gewebeartige Tuch über dem gewebeartigen Träger aufgebracht und auf diesem gemäß (d) das gelöste Polymer mit Wasser zu einem Hydrogel entwickelt wird.

8. Verfahren nach Anspruch 7, dadurch gekennzeichnet, daß vor dem Aufbringen des Verbundmaterials ein Rand auf dem gewebeartigen Tuch um den gewebeartigen Träger herum mit dem gelösten Polymer gemäß (b) bestrichen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 094 980 (S.K.Y. POLYMERS INC.) * Zusammenfassung; Ansprüche 1,11,13,18,22; Seite 7, Zeilen 1-20; Seite 7, Zeile 36 - Seite 8, Zeile 2; Seite 10, Zeile 18 - Seite 13, Zeile 21; Seite 14, Zeile 1 - Seite 15, Zeile 19 * | 1,2 | C 25 B 11/00 H 01 M 4/00 B 01 D 13/00 |
| Y | | 3,4,6 | |
| Y | DE-A-1 667 358 (SIEMENS AG) * Ansprüche 1-4,10,11; Seite 4, Zeile 14 - Seite 5, Zeile 14; Seite 5, letzte Zeile - Seite 6, Zeile 9; Seite 7, Zeilen 1-19; Seite 8, Zeilen 19-23; Beispiele 2,5,7 * | 1,2,5 | |
| Y | FR-A-2 553 935 (SOC. LES PILES WONDER) * Zusammenfassung; Ansprüche 1,2,4; Seite 3, Zeile 30 - Seite 4, Zeile 1; Beispiel 4 * | 1,2,5 | |
| A | | 7 | **RECHERCHIERTE SACHGEBIETE (Int. Cl.4)** |
| A. | EP-A-0 182 451 (PROTOTECH CO.) * Zusammenfassung; Ansprüche 1,2,6-14; Seite 5, zeilen 10-18; Seite 7, Zeilen 3-19; Seite 8, Zeile 16 - Seite 9, Zeile 19; Figur 2; Beispiele 1,2,4 * | 1,2,4,7 | B 01 D C 08 J H 01 M C 25 B |
| A | DE-A-2 212 581 (ESB INC.) * Ansprüche 1,5,7,8-13,16; Seite 6, Zeilen 2-22; Seite 8, Zeilen 3-11 * --- -/- | 1,7 | |

Der vorliegende Recherchenbericht wurde für alle Patentansprüche erstellt

| Recherchenort | Abschlußdatum der Recherche | Prüfer |
|---|---|---|
| DEN HAAG | 06-09-1989 | HOORNAERT P.G.R.J. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 432 863 (E.I. DU PONT DE NEMOURS) * Figur; Zusammenfassung I, Punkte 1, a-e * | 3 | |
| Y | FR-A-1 428 301 (E.I. DU PONT DE NEMOURS) * Insgesamt * | 4 | |
| Y | RESEARCH DISCLOSURE, Dezember 1972, Nr. 10446; C.L. STRICKER: "Coated porous supports for solution-cast membranes" * Insgesamt * | 6 | |
| A | FR-A- 456 334 (G. MALFITANO) * Insgesamt * | 7,8 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 06-09-1989 | HOORNAERT P.G.R.J. |